# EUROPEAN PATENT APPLICATION

(11) **EP 3 617 260 A1**
(43) Date of publication of application: **04.03.2020**
(21) Application number: 19199130.6
(22) Date of filing: 03.08.2015
(51) Int. Cl.: C08K 3/34, C08L 23/12, B32B 27/32, C08J 9/14

(54) **POLYPROPYLENE COMPOSITION SUITABLE FOR FOAMED SHEETS AND ARTICLES**

(62) Divisional of application: 15179458.3
(71) Applicant: Borealis AG, 1220 Vienna (AT)
(72) Inventor: Lin, Yi An, Taipei, 110 (CN)
(74) Representative: Lux, Berthold

(57) **Abstract**

Cups based on a multi-layered sheet comprising at least one foamed layer based on high melt strength polypropylene and a nucleating agent.

## Description

The present invention relates to a polypropylene composition comprising a nucleating agent, a foamed sheet made thereof, a multi-layered sheet and articles comprising the foamed sheet or the multi-layered sheet, e.g. containers, such as cups.

High melt strength polypropylene compositions and foams made thereof are generally known in the art. However, obtaining a homogeneous and improved foam quality thereof remains a challenge. With improved foam quality the same or even improved mechanical properties can be obtained with articles having lower thickness.

For example, in case of cups made from polypropylene foam the wall thickness can be reduced allowing for more cups being stored in the same volume and, thus, reducing storage and transportation costs. Moreover, the amount of material subjected to recycling processes or waste treatment is reduced.

One method to produce high melt strength polypropylene (HMS-PP) is described in EP 0 879 830, filed by Borealis in 1997. It describes the basics of the Borealis high melt strength (HMS) post-reactor process where peroxide and butadiene are used to make long chain branched polypropylene materials.

There remains the need for a polypropylene composition suitable for producing foams having improved mechanical stability.

It has been surprisingly found that by using a nucleating agent having a specific size the foam quality can be significantly improved.

The present invention, thus, provides a polypropylene composition (PC) comprising
- a high melt strength polypropylene (HMS-PP); and
- a nucleating agent (NA) having a particle size d₅₀ within the range of 1 µm to 30 µm.

By using the nucleating agent having the specific size according to the invention the mechanical properties of the foam were significantly improved allowing for lower article thicknesses while maintaining mechanical properties. Moreover, the H₂O-absorption of articles foamed from the inventive composition was very low indicating a low number and low volume of open cells. Furthermore, the thermal insulation properties are also improved. Both are particularly advantageous in case liquid comes in direct contact with the foamed article. Thus, less liquid is absorbed by the foamed article which is particularly advantageous in case the foamed article is recycled. As less liquid is absorbed, the residues remaining after evaporation of the liquid, e.g. in case of coffee, soft drinks etc., are significantly reduced and, thus, less cleaning is required prior to or during the recycling of the foam and the properties of the recycled product are improved. Moreover, also the printability is improved as the ink used for printing does not bleed resulting in clear images. Thus, an additional layer for printing in the final article is not necessary.

### The high melt strength polypropylene (HMS-PP)

The major component for the polypropylene composition (PC) to be provided according to the invention is a high melt strength polypropylene (HMS-PP). A high melt strength polypropylene is branched and, thus, differs from a linear polypropylene in that the polypropylene backbone covers side chains whereas a non-branched polypropylene, i.e. a linear polypropylene, does not cover side chains. The side chains have significant impact on the rheology of the polypropylene. Accordingly linear polypropylenes and high melt strength polypropylenes can be clearly distinguished by their flow behaviour under stress.

Branching can be generally achieved by using specific catalysts, i.e. specific single-site catalysts, or by chemical modification. Concerning the preparation of a branched polypropylene obtained by the use of a specific catalyst reference is made to EP 1 892 264. With regard to a branched polypropylene obtained by chemical modification it is referred to EP 0 879 830 A1. In such a case the branched polypropylene is also called high melt strength polypropylene. The high melt strength polypropylene (HMS-PP) according to the instant invention is obtained by chemical modification of a polypropylene (PP) as described in more detail below. HMS-PP is commercially available from Borealis AG under the trade name Daploy™.

Therefore the high melt strength polypropylene (HMS-PP), as the major component of the polypropylene composition (PC) has an F₃₀ melt strength of more than 20.0 cN and a v₃₀ melt extensibility of more than 200 mm/s, preferably has an F₃₀ melt strength of more than 20.0 to 50.0 cN and a v₃₀ melt extensibility of more than 200 to 300 mm/s, in order to provide a resulting polypropylene composition with good shear thinning properties. The F₃₀ melt strength and the v₃₀ melt extensibility are measured according to ISO 16790:2005.

Typically the instant polypropylene composition also has an F₃₀ melt strength of more than 20.0 cN and a v₃₀ melt extensibility of more than 200 mm/s, preferably has an F₃₀ melt strength of more than 20.0 to 50.0 cN and a v₃₀ melt extensibility of more than 200 to 300 mm/s.

In a preferred embodiment, the high melt strength polypropylene (HMS-PP), has
(a) an F₃₀ melt strength of more than 20.0 cN, like of more than 20.0 to 50.0 cN, more preferably of more than 21.0 cN, still more preferably of 21.0 to 50.0 cN, yet more preferably of 25.0 to 50.0 cN, still yet more preferably of 25.0 to 45.0 cN, most preferably of 30.0 to 45.0 cN, like of 32.0 to 42.0 cN or 34.0 cN to 42.0 cN;
   and
(b) a v₃₀ melt extensibility of more than 200 mm/s, like more than 210 to 300 mm/s, more preferably more than 220 to 300 mm/s, still more preferably of more than 225 mm/s, yet more preferably of 225 to 300 mm/s, still yet more preferably of 230 to 290 mm/s, like 250 to 290 mm/s or 253 to 290 mm/s.

In an especially preferred embodiment the high melt strength polypropylene (HMS-PP), has an F₃₀ melt strength of more than 20.0 cN and a v₃₀ melt extensibility of more than 200 to 300 mm/s, like an F₃₀ melt strength of more than 20.0 to 50.0 cN and v₃₀ melt extensibility of more than 220 to 300 mm/s, more preferably an F₃₀ melt strength of more than 21.0 cN and v₃₀ melt extensibility of more than 225 mm/s, still more preferably an F₃₀ melt strength of 21.0 to 50.0 cN and v₃₀ melt extensibility of 225 to 300 mm/s, yet more preferably an F₃₀ melt strength of 25.0 to 50.0 cN and v₃₀ melt extensibility of 230 to 290 mm/s, still yet more preferably an F₃₀ melt strength of 25.0 to 45.0 cN and v₃₀ melt extensibility of 230 to 290 mm/s, most preferably an F₃₀ melt strength of 30.0 to 45.0 cN and v₃₀ melt extensibility of 230 to 290 mm/s, like an F₃₀ melt strength of 32.0 to 42.0 cN and v₃₀ melt extensibility of 230 to 290 mm/s or an F₃₀ melt strength of 34.0 to 42.0 cN and v₃₀ melt extensibility of 250 to 290 mm/s or an F₃₀ melt strength of 34.0 to 42.0 cN and v₃₀ melt extensibility of 253 to 290 mm/s.

Further it is preferred that the high melt strength polypropylene (HMS-PP), has a melt flow rate MFR₂ (230 °C) measured according to ISO 1133 of not more than 15.0 g/10min, more preferably in a range of 0.5 to 15.0 g/10 min, yet more preferably in a range of 1.0 to 15.0 g/10 min, like in the range of 1.5 to 15.0 g/10min.

In a particularly preferred embodiment the high melt strength polypropylene (HMS-PP), has a melt flow rate MFR₂ (230 °C) measured according to ISO 1133 of not more than 7.0 g/10min, preferably in a range of 0.5 to 7.0 g/10 min, more preferably in a range of 0.5 to 6.5 g/10 min, still more preferably in a range of 0.5 to 6.0 g/10 min, yet more preferably in a range of 1.0 to 6.0 g/10 min, like in the range of 1.5 to 5.0 g/10min.

Hence in one specific embodiment, the high melt strength polypropylene (HMS-PP), has
(a) a melt flow rate MFR₂ (230 °C) not more than 15.0 g/10min, more preferably in a range of 0.5 to 15.0 g/10 min, yet more preferably in a range of 1.0 to 15.0 g/10 min, like in the range of 1.5 to 15.0 g/10min;
(b) an F₃₀ melt strength of more than 20.0 cN, like of more than 20.0 to 50.0 cN, more preferably of more than 21.0 cN, still more preferably of 21.0 to 50.0 cN, yet more preferably of 25.0 to 50.0 cN, still yet more preferably of 25.0 to 45.0 cN, most preferably of 30.0 to 45.0 cN, like of 32.0 to 42.0 cN or 34.0 to 42.0 cN; and
(c) a v₃₀ melt extensibility of more than 200 mm/s, preferably more than 210 to 300 mm/s, like of more than 220 to 300 mm/s, more preferably of more than 225 mm/s, still more preferably of 225 to 300 mm/s, yet more preferably of 230 to 290 mm/s like 250 to 290 mm/s or 253 to 290 mm/s.

In a particularly preferred variant of this embodiment the high melt strength polypropylene (HMS-PP), has a melt flow rate MFR₂ (230 °C) measured according to ISO 1133 of not more than 7.0 g/10min, preferably in a range of 0.5 to 7.0 g/10 min, more preferably in a range of 0.5 to 6.5 g/10 min, still more preferably in a range of 0.5 to 6.0 g/10 min, yet more preferably in a range of 1.0 to 6.0 g/10 min, like in the range of 1.5 to 5.0 g/10min.

Accordingly in a specific embodiment the high melt strength polypropylene (HMS-PP), has a melt flow rate MFR₂ (230 °C) of not more than 15.0 g/10min, an F₃₀ melt strength of more than 20.0 cN and a v₃₀ melt extensibility of more than 210 to 300 mm/s, like a melt flow rate MFR₂ (230 °C) in a range of 0.5 to 15.0 g/10 min, an F₃₀ melt strength of more than 20.0 to 50.0 cN and v₃₀ melt extensibility of more than 220 to 300 mm/s, more preferably a melt flow rate MFR₂ (230 °C) in a range of 0.5 to 15.0 g/10 min, an F₃₀ melt strength of more than 21.0 cN and v₃₀ melt extensibility of more than 225 mm/s, still more preferably a melt flow rate MFR₂ (230 °C) in a range of 1.0 to 15.0 g/10 min, an F₃₀ melt strength of 21.0 to 50.0 cN and v₃₀ melt extensibility of 225 to 300 mm/s, yet more preferably a melt flow rate MFR₂ (230 °C) in a range of 1.0 to 6.0 g/10min, an F₃₀ melt strength of 25.0 to 50.0 cN and v₃₀ melt extensibility of 230 to 290 mm/s, still yet more preferably a melt flow rate MFR₂ (230 °C) in a range of 1.0 to 15.0 g/10min, an F₃₀ melt strength of 25.0 to 45.0 cN and a v₃₀ melt extensibility of 230 to 290 mm/s, most preferably a melt flow rate MFR₂ (230 °C) in a range of 1.0 to 15.0 g/10min, an F₃₀ melt strength of 30.0 to 45.0 cN and v₃₀ melt extensibility of 230 to 290 mm/s, like a melt flow rate MFR₂ (230 °C) in a range of 1.0 to 15.0 g/10min, an F₃₀ melt strength of 32.0 to 42.0 cN and v₃₀ melt extensibility of 230 to 290 mm/s or a melt flow rate MFR₂ (230 °C) in a range of 1.0 to 15.0 g/10min, an F₃₀ melt strength of 34.0 to 42.0 cN and v₃₀ melt extensibility of 250 to 290 mm/s or a melt flow rate MFR₂ (230 °C) in a range of 1.0 to 15.0 g/10min, an F₃₀ melt strength of 34.0 to 42.0 cN and v₃₀ melt extensibility of 253 to 290 mm/s.

In a particularly preferred variant of this embodiment the high melt strength polypropylene (HMS-PP), has a melt flow rate MFR₂ (230 °C) measured according to ISO 1133 of not more than 7.0 g/10min, preferably in a range of 0.5 to 7.0 g/10 min, more preferably in a range of 0.5 to 6.5 g/10 min, still more preferably in a range of 0.5 to 6.0 g/10 min, yet more preferably in a range of 1.0 to 6.0 g/10 min, like in the range of 1.5 to 5.0 g/10min or like in the range of 1.0 to 5.0 g/10min.

Preferably, the high melt strength polypropylene (HMS-PP), has a melting point of at least 130°C, more preferably of at least 135°C and most preferably of at least 140°C. The crystallization temperature is preferably at least 110 °C, more preferably at least 120 °C.

Further, the high melt strength polypropylene (HMS-PP), can be a high melt strength random propylene copolymer (R-HMS-PP), or a high melt strength propylene homopolymer (H-HMS-PP), the latter being preferred.

For the purpose of the present invention, the expression "propylene homopolymer" refers to a polypropylene that consists substantially, i.e. of at least 97 mol.-%, preferably of at least 98 mol.-%, more preferably of at least 99 mol.-%, most preferably of at least 99.8 mol.-% of propylene units. In a preferred embodiment only propylene units in the propylene homopolymer are detectable.

In case the high melt strength polypropylene (HMS-PP), is a high melt strength random propylene copolymer (R-HMS-PP), it comprises monomers copolymerizable with propylene, for example comonomers such as ethylene and/or C₄ to C₁₂ α-olefins, in particular ethylene and/or C₄ to C₁₀ α-olefins, e.g. 1-butene and/or 1-hexene. Preferably the high melt strength random propylene copolymer (R-HMS-PP), comprises, especially consists of, monomers copolymerizable with propylene from the group consisting of ethylene, 1 butene and 1-hexene. More specifically the high melt strength random propylene copolymer (R-HMS-PP), comprises - apart from propylene - units derivable from ethylene and/or 1-butene. In a preferred embodiment the high melt strength random propylene copolymer (R-HMS-PP), comprises units derivable from ethylene and propylene only. The comonomer content in the high melt strength random propylene copolymer (R-HMS-PP), is preferably in the range of more than 0.2 to 10.0 mol.-%, still more preferably in the range of more than 0.5 to 7.0 mol.-%.

In this regard it is to mention that the high melt strength polypropylene (HMS-PP) being either a high melt strength propylene homopolymer (H-HMS-PP) or a high melt strength random propylene copolymer (R-HMS-PP) may comprise additionally unsaturated monomers different to the comonomers defined for the high melt strength random propylene copolymer (R-HMS-PP). In other words the high melt strength propylene homopolymer (H-HMS-PP) or the high melt strength random propylene copolymer (R-HMS-PP) may comprise unsaturated units, like bifunctionally unsaturated monomer(s) and/or multifunctionally unsaturated low molecular weight polymer(s) as defined in detail below, being different to propylene, ethylene and other C₄ to C₁₂ α-olefins. Accordingly the definition of homopolymer and copolymer in view of the high melt strength polypropylene (HMS-PP) refers actually to the unmodified polypropylene, i.e. to the polypropylene (PP), which is preferably a linear polypropylene (l-PP), used to obtain the melt strength polypropylene (HMS-PP) by chemical modification as defined in detail below.

Accordingly in one preferred embodiment the high melt strength polypropylene (HMS-PP), comprises
(a) if it is a high melt strength propylene homopolymer (H-HMS-PP) units derived from
   (i) propylene and
   (ii) bifunctionally unsaturated monomer(s) and/or multifunctionally unsaturated low molecular weight polymer(s),
   or
(b) if it is a high melt strength random propylene copolymer (R-HMS-PP) units derived from
   (i) propylene
   (ii) ethylene and/or C₄ to C₁₂ α-olefins, e.g. 1-butene and/or 1-hexene, preferably erthylene, and
   (iii) bifunctionally unsaturated monomer(s) and/or multifunctionally unsaturated low molecular weight polymer(s),
   "Bifunctionally unsaturated" or "multifunctionally unsaturated" as used above means preferably the presence of two or more non-aromatic double bonds, as in e.g. divinylbenzene or cyclopentadiene or polybutadiene. Only such bi- or multifunctionally unsaturated compounds are used which can be polymerized preferably with the aid of free radicals (see below). The unsaturated sites in the bi- or multifunctionally unsaturated compounds are in their chemically bound state not actually "unsaturated", because the double bonds are each used for a covalent bond to the polymer chains of the unmodified polypropylene, i.e. of the polypropylene (PP), preferably of the linear polypropylene (l-PP).

Reaction of the bifunctionally unsaturated monomer(s) and/or multifunctionally unsaturated low molecular weight polymer(s), preferably having a number average molecular weight (Mn) ≤ 10000 g/mol, synthesized from one and/or more unsaturated monomers with the unmodified polypropylene, i.e. with the polypropylene (PP), preferably with the linear polypropylene (l-PP), are performed in the presence of a thermally free radical forming agent, e. g. decomposing free radical-forming agent, like a thermally decomposable peroxide.

The bifunctionally unsaturated monomers may be
- divinyl compounds, such as divinylaniline, m-divinylbenzene, p-divinylbenzene, divinylpentane and divinylpropane;
- allyl compounds, such as allyl acrylate, allyl methacrylate, allyl methyl maleate and allyl vinyl ether;
- dienes, such as 1,3-butadiene, chloroprene, cyclohexadiene, cyclopentadiene, 2,3-dimethylbutadiene, heptadiene, hexadiene, isoprene and 1,4-pentadiene;
- aromatic and/or aliphatic bis (maleimide) bis (citraconimide) and mixtures of these unsaturated monomers.

Especially preferred bifunctionally unsaturated monomers are 1,3-butadiene, isoprene, dimethyl butadiene and divinylbenzene.

The multifunctionally unsaturated low molecular weight polymer, preferably having a number average molecular weight (Mn) ≤ 10000 g/mol may be synthesized from one or more unsaturated monomers.

Examples of such low molecular weight polymers are
- polybutadienes, especially where the different microstructures in the polymer chain, i.e. 1,4-cis, 1,4-trans and 1,2-(vinyl) are predominantly in the 1,2-(vinyl) configuration
- copolymers of butadiene and styrene having 1,2- (vinyl) in the polymer chain.

A preferred low molecular weight polymer is polybutadiene, in particular a polybutadiene having more than 50.0 wt.-% of the butadiene in the 1,2-(vinyl) configuration.

The high melt strength polypropylene (HMS-PP), may contain more than one bifunctionally unsaturated monomer and/or multifunctionally unsaturated low molecular weight polymer. Even more preferred the amount of bifunctionally unsaturated monomer(s) and multifunctionally unsaturated low molecular weight polymer(s) together in the high melt strength polypropylene (HMS-PP), is 0.01 to 10.0 wt.-% based on said high melt strength polypropylene (HMS-PP).

In a preferred embodiment the high melt strength polypropylene (HMS-PP), is free of additives (A). Accordingly in case the instant polypropylene composition comprises additives (A), these additives (A) are not brought in the polypropylene composition during the manufacture of the high melt strength polypropylene (HMS-PP).

The high melt strength polypropylene (HMS-PP) further preferably has a low gel content usually below 1.00 wt.%. Preferably the gel content is less than 0.80 wt.%, more preferably less than 0.50 wt.%.

A suitable HMS-PP is WB140HMS™ commercially available from Borealis AG.

### The polypropylene (PP)

As mentioned above, the high melt strength polypropylene (HMS-PP), is a modified polypropylene, which is obtained by reacting the polypropylene (PP) with a thermally decomposing free radical-forming agent and optionally with bifunctionally unsaturated monomer(s) and/or with multifunctionally unsaturated low molecular weight polymer(s). The polypropylene (PP) is preferably a linear polypropylene (l-PP)

It is preferred that the polypropylene (PP), preferably the linear polypropylene (l-PP), has a melt flow rate MFR₂ (230°C) measured according to ISO 1133 in the range of 0.1 to 18.0 g/10min, like of 0.1 to 15.0 g/10min or 0.2 to 15.0 g/10min, more preferably of 0.2 to below 10.0 g/10min, still more preferably of 0.2 to 9.0 g/10min, yet more preferably of 0.3 to 8.0 g/10min.

The high melt strength polypropylene (HMS-PP) differs from the polypropylene (PP) which is used for its manufacture in that the backbone of the high melt strength polypropylene (HMS-PP) covers side chains whereas the staring product, i.e. the polypropylene (PP) including the preferred linear polypropylene (l-PP), does not cover or nearby does not cover side chains. The side chains have significant impact on the rheology of the polypropylene. Accordingly the starting product, i.e. the polypropylene (PP), and the obtained high melt strength polypropylene (HMS-PP), can be clearly distinguished by its flow behaviour under stress.

Further, as mentioned above the polypropylene (PP) is preferably a linear polypropylene (1-PP). The same considerations apply to the polypropylene (PP') as discussed in detail below which is also in a preferred embodiment a linear polypropylene (l-PP'). Accordingly, throughout the instant invention, the term "linear polypropylene" indicates that the linear polypropylene, shows no or nearby no-branching structure. Due to the absence of branches, the linear polypropylenes, i.e. the linear polypropylene (l-PP) and the linear polypropylene (l-PP'), are preferably featured by a low v₃₀ melt extensibility and/or a low F₃₀ melt strength.

Thus it is preferred that the linear polypropylene (l-PP) has
(a) a F₃₀ melt strength of more than 1.0 cN, preferably of more than 2.0 cN, more preferably in the range of 1.0 to below 68.0 cN, still more preferably in the range of 1.5 to 65.0 cN, yet more preferably in the range of 2.0 to 60.0 cN, still yet more preferably in the range of 2.5 to 50.0 cN like in the range of 2.5 to 45.0 cN;
   and
(b) a v₃₀ melt extensibility of below 200 mm/s, preferably of below 190 mm/s, more preferably in the range of 100 to below 200 mm/s, still more preferably in the range of 120 to 190 mm/s, yet more preferably in the range of 120 to 175 mm/s, like in the range of 125 to 170 mm/s.

In other words it is preferred that the linear polypropylene (l-PP) has a F₃₀ melt strength of more than 1.0 cN and a v₃₀ melt extensibility of below 200 mm/s, preferably a F₃₀ melt strength of more than 2.0 cN and a v₃₀ melt extensibility of below 190 mm/s, more preferably a F₃₀ melt strength in the range of 1.0 to below 68.0 cN and a v₃₀ melt extensibility in the range of 100 to below 200 mm/s, yet more preferably a F₃₀ melt strength in the range of 1.5 to 65.0 cN and in the range of 120 to 190 mm/s, still yet more preferably a F₃₀ melt strength in the range of 2.0 to 60.0 cN and in the range of 120 to 190 mm/s, like a F₃₀ melt strength in the range of 2.5 to 50.0 cN and a v₃₀ melt extensibility in the range of 120 to 175 mm/s.

Accordingly in one specific embodiment the linear polypropylene (l-PP) has
(a) a melt flow rate MFR₂ (230 °C) measured according to ISO 1133 in the range of 0.1 to 18.0 g/10min, like of 0.1 to 15.0 g/10min or 0.2 to 15.0 g/10min, more preferably of 0.2 to below 10.0 g/10min, still more preferably of 0.2 to 9.0 g/10min, yet more preferably of 0.3 to 8.0 g/10min;
(b) a F₃₀ melt strength of more than 1.0 cN, preferably of more than 2.0 cN, more preferably in the range of 1.0 to below 68.0 cN, still more preferably in the range of 1.5 to 65.0 cN, yet more preferably in the range of 2.0 to 60.0 cN, still yet more preferably in the range of 2.5 to 50.0 cN like in the range of 2.5 to 45.0 cN; and
(c) a v₃₀ melt extensibility of below 200 mm/s, preferably of below 190 mm/s, more preferably in the range of 100 to below 200 mm/s, still more preferably in the range of 120 to 190 mm/s, yet more preferably in the range of 120 to 175 mm/s, like in the range of 125 to 170 mm/s.

Therefore, in one specific embodiment the polypropylene (PP) is a linear polypropylene (1-PP) having a melt flow rate MFR₂ (230 °C) of 0.1 to 18.0 g/10min, a F₃₀ melt strength of more than 1.0 cN and a v₃₀ melt extensibility of below 200 mm/s, preferably a melt flow rate MFR₂ (230 °C) in the range of 0.2 to 15.0 g/10min, a F₃₀ melt strength of more than 2.0 cN and a v₃₀ melt extensibility of below 190 mm/s, more preferably a melt flow rate MFR₂ (230 °C) in the range of 0.2 to 15.0 g/10min, a F₃₀ melt strength in the range of 1.0 to 68.0 cN and a v₃₀ melt extensibility in the range of 100 to below 200 mm/s, yet more preferably a melt flow rate MFR₂ (230 °C) in the range of 0.2 to below 10.0 g/10min, a F₃₀ melt strength in the range of 2.0 to 60.0 cN and in the range of 120 to 190 mm/s, still yet more preferably a melt flow rate MFR₂ (230 °C) in the range of 0.2 to 9.0 g/10min, a F₃₀ melt strength in the range of 2.5 to 50.0 cN and in the range of 120 to 190 mm/s, like a melt flow rate MFR₂ (230 °C) in the range of 0.3 to 8.0 g/10min, a F₃₀ melt strength in the range of 2.5 to 45.0 cN and a v₃₀ melt extensibility in the range of 120 to 175 mm/s.

Preferably, the polypropylene (PP), preferably the linear polypropylene (l-PP), has a melting point of at least 140°C, more preferably of at least 150°C and still more preferably of at least 158°C.

The polypropylene (PP), preferably the linear polypropylene (l-PP), can be produced in a known manner for instance by employing a single-site or a Ziegler Natta catalyst. The polypropylene (PP), preferably the linear polypropylene (l-PP), can be a propylene homopolymer (H-PP), preferably a linear propylene homopolymer (l-H-PP), or a propylene copolymer (R-PP), preferably a linear propylene copolymer (l-R-PP). Concerning the comonomer content and type of comonomer it is referred to the information provided above for the high melt strength random propylene copolymer (R-HMS-PP). Preferably the polypropylene (PP) is a linear polypropylene (l-PP). Still more preferably the polypropylene (PP) is a linear propylene homopolymer (l-H-PP). Accordingly all information provided with regard to melt flow rate MFR₂ (230°C), melting point, F₃₀ melt strength, v₃₀ melt extensibility, and particle size and particle size distribution, respectively, applies especially for the linear propylene homopolymer (l-H-PP).

In a preferred embodiment the polypropylene (PP), preferably the linear polypropylene (l-PP), is free of additives (A). Accordingly in case the instant polypropylene composition comprises additives (A), these additives (A) are preferably not brought in the polypropylene composition during the manufacture of the high melt strength polypropylene (HMS-PP).

### The nucleating agent (NA)

The polypropylene composition (PC) further comprises one or more, preferably one, nucleating agent(s).

The nucleating agent (NA) is preferably selected from: salts of monocarboxylic acids and polycarboxylic acids, for example sodium benzoate; Sorbitol compounds, for instance diacetals of sorbitol or xylitol, for example 1,3 : 2,4 Bis(3,4-dimethylbenzylidene) sorbitol (CAS-no. 135861-56-2, e.g. Millad 3988, supplier Milliken); nonitol based nucleating agents, for instance 1,2,3-trideoxy-4,6:5,7-bis-O-((4-propylphenyl) methylene) nonitol (CAS-no. 882073-43-0, e.g. Millad NX8000, supplier Milliken); Phosphorous-based compounds, for instance mono-, bis- or tetra-phenyl phosphates, for example Sodium 2,2'-methylene bis-(4,6-di-tert. butylphenyl) phosphate (CAS-no. 85209-91-2, e.g. NA-11, supplier Adeka Corporation) or Hydroxybis (2,4,8,10-tetra-tert. butyl-6-hydroxy-12H-dibenzo(d,g)(1.,3,2) dioxaphosphocin 6-oxidato) aluminium (CAS-no. 151841-65-5, e.g. ADK STAB NA-21, supplier Adeka Corporation), or talc or any mixtures thereof.

Talc is particularly preferred. In a preferred embodiment talc is the only nucleating agent present in the polypropylene composition (PC).

The particle size d50 of the nucleating agent, e.g. talc, is within the range of 1 µm to 30 µm, preferably within the range of 2 µm to 25 µm, more preferably within the range of 5 µm to 20 µm and most preferably within the range of 5 µm to 15 µm.

### The further HMS polypropylene (HMS-PP')

During the preparation of the instant polypropylene composition (PC) a further HMS polypropylene (HMS-PP') may be added. This further HMS polypropylene (HMS-PP') is preferably used to bring additives (A) and/or the one or more nucleating agent(s) (NA) in the instant polypropylene composition, preferably the nucleating agent (NA) and, optionally, the additives (A). Accordingly in a preferred embodiment the nucleating agent (NA) and, optionally, the additives (A) are introduced in the instant polypropylene composition in the form of an additive mixture (AM), wherein said additive mixture comprises, preferably consists of, the further HMS polypropylene (HMS-PP') the nucleating agent (NA) and, optionally, the additives (A).

For the purpose of the present invention the nucleating agent (NA) is not considered an additive (A). However, the nucleating agent (NA) is part of the additive mixture (AM), if present.

As mentioned above further high melt strength polypropylene (HMS-PP') is used as a carrier to introduce the nucleating agent (NA) and, optionally, the additives (A) in the polypropylene composition (PC). In other words an additive mixture (AM) comprising, preferably consisting of, the further high melt strength polypropylene (HMS-PP') the nucleating agent (NA) and, optionally, the additives (A) is used in the instant process for the manufacture of the polypropylene composition.

In a specific embodiment the high melt strength polypropylene (HMS-PP) and the further high melt strength polypropylene (HMS-PP') are the same.

Accordingly in one preferred embodiment the high melt strength polypropylene (HMS-PP) and the further high melt strength polypropylene (HMS-PP') have the same properties, in particular in view of melt flow rate MFR₂ (230 °C), F₃₀ melt strength and v₃₀ melt extensibility as discussed above. The melt strength polypropylene (HMS-PP') is produced in the same manner as the melt strength polypropylene (HMS-PP).

A suitable HMS-PP' is WB140HMS™ commercially available from Borealis AG.

### Additives (A)

The additives (A) can be any additives useful in the technical area of the high melt strength polypropylene (HMS-PP) and its applications. Accordingly the additives (A) to be used in the polypropylene composition of the invention and thus in form of the additive mixture (AM) include, but are not limited to, stabilizers such as antioxidants (e.g. sterically hindered phenols, phosphites/phosphonites, sulphur containing antioxidants, alkyl radical scavengers, aromatic amines, hindered amine stabilizers, or blends thereof), metal deactivators (e.g. Irganox MD 1024), or UV stabilizers (e.g. hindered amine light stabilizers). Other typical additives are modifiers such as antistatic or antifogging agents (e.g. ethoxylated amines and amides, or glycerol esters), acid scavengers, blowing agents, cling agents (e.g. polyisobutene), lubriciants and resins (ionomer waxes, PE- and ethylene copolymer waxes, Fischer-Tropsch waxes, Montan-based waxes, Fluoro-based compounds, or paraffin waxes), as well as slip and antiblocking agents (e.g. Ca-stearate, erucamide, oleamide, talc natural silica and synthetic silica, or zeolites). Preferably the additives (A) are selected from the group consisting of antioxidants (e.g. sterically hindered phenols, phosphites/phosphonites, sulphur containing antioxidants, alkyl radical scavengers, aromatic amines, hindered amine stabilizers, or blends thereof), metal deactivators (e.g. Irganox MD 1024), UV stabilizers (e.g. hindered amine light stabilizers), antistatic or antifogging agents (e.g. ethoxylated amines and amides, or glycerol esters), acid scavengers, blowing agents, cling agents (e.g. polyisobutene), lubriciants and resins (ionomer waxes, PE- and ethylene copolymer waxes, Fischer-Tropsch waxes, Montan-based waxes, Fluoro-based compounds, or paraffin waxes), slip agents (e.g. Ca-stearate), antiblocking agents (e.g. erucamide, oleamide, talc natural silica and synthetic silica, or zeolites) and mixtures thereof.

Preferable additives are slip agents, such as for example Ca-stearate.

As outlined above, the additives (A) do not encompass nucleating agent.

Typically the total amount of additives (A) is not more than 15 wt.-%, more preferably not more than 10 wt.-%, like in the range of 0.1 to 10 wt.-%, preferably 0.1 to 5 wt.%, more preferably 0.2 to 1 wt.% based on the total weight of the polypropylene composition.

### The polypropylene composition (PC)

As mentioned above, the polypropylene composition (PC) comprises a high melt strength polypropylene (HMS-PP) and a nucleating agent (NA).

The major component in the instant polypropylene composition (PC) is the high melt strength polypropylene (HMS-PP). Accordingly the polypropylene composition comprises at least 70 wt.-%, more preferably at least 75 wt.-%, yet more preferably at least 80 wt.-%, still more preferably at least 85 wt.-%, still yet more preferably at least 90 wt.-%, like at least 95 wt.-%, of the high melt strength polypropylene (HMS-PP).

More preferably the instant polypropylene composition comprises
(a) 80.0 to 99.90 parts by weight preferably 90 to 99.90 parts by weight, more preferably 92 to 99.80 parts by weight, even more preferably 93.0 to 99.70 parts by weight, even more preferably 95.0 to 99.70 parts by weight of the high melt strength polypropylene (HMS-PP); and
(b) 0.10 to 15.0 parts by weight, preferably 0.20 to 10.0 parts by weight, more preferably 0.30 to 7.0 parts by weight and most preferably 0.30 to 5.0 parts by weight of the nucleating agent (NA);
(c) optionally 1 to 20 parts by weight, preferably 1 to 10 parts by weight, more preferably 1 to 5 parts by weight, of the further high melt strength polypropylene (HMS-PP').

In a preferred embodiment besides the high melt strength polypropylene (HMS-PP), the further high melt strength polypropylene (HMS-PP'), if present, other polymers are only present in a total amount not exceeding 5 wt.-%, more preferably not exceeding 2 wt.-%, still more preferably not exceeding 1 wt.-%, based on the total weight of the polypropylene composition (PC).

More, preferably the total amount of the high melt strength polypropylene (HMS-PP), the nucleating agent (NA) and the further high melt strength polypropylene (HMS-PP') is at least 85 wt.% based on the polypropylene composition (PC), more preferably at least 90 wt.% based on the polypropylene composition (PC), even more preferably at least 95 wt.% based on the polypropylene composition (PC) and most preferably at least 99 wt.% based on the polypropylene composition (PC).

In a specific embodiment the high melt strength polypropylene (HMS-PP) and the further high melt strength polypropylene (HMS-PP'), if present are the only polymer components in the polypropylene composition (PC) .

As mentioned above the high melt strength polypropylene (HMS-PP), is a major part in the instant polypropylene composition. Accordingly it is preferred that the final polypropylene composition shows a similar rheology behavior as the high melt strength polypropylene (HMS-PP).

Thus the instant polypropylene composition preferably has
(a) an F₃₀ melt strength of more than 20.0 cN, like of more than 20.0 to 50.0 cN, more preferably of more than 21.0 cN, still more preferably of 21.0 to 50.0 cN, yet more preferably of 25.0 to 50.0 cN, still yet more preferably of 25.0 to 45.0 cN, most preferably of 30.0 to 45.0 cN, like of 32.0 to 42.0 cN or 34.0 cN to 42.0 cN;
   and
(b) a v₃₀ melt extensibility of more than 200 mm/s, preferably more than 210 to 300 mm/s, like of more than 220 to 300 mm/s, more preferably of more than 225 mm/s, still more preferably of 225 to 300 mm/s, yet more preferably of 230 to 290 mm/s, like 250 to 290 mm/s or 253 to 290 mm/s.

In an especially preferred embodiment the polypropylene composition (PC), has an F₃₀ melt strength of more than 20.0 cN and a v₃₀ melt extensibility of more than 200 mm/s, preferably more than 210 to 300 mm/s, like an F₃₀ melt strength of more than 20.0 to 50.0 cN and v₃₀ melt extensibility of more than 220 to 300 mm/s, more preferably an F₃₀ melt strength of more than 21.0 cN and v₃₀ melt extensibility of more than 225 mm/s, still more preferably an F_{3O} melt strength of 21.0 to 50.0 cN and v₃₀ melt extensibility of 225 to 300 mm/s, yet more preferably an F₃₀ melt strength of 25.0 to 50.0 cN and v₃₀ melt extensibility of 230 to 290 mm/s, still yet more preferably an F₃₀ melt strength of 25.0 to 45.0 cN and v₃₀ melt extensibility of 230 to 290 mm/s, most preferably an F₃₀ melt strength of 30.0 to 45.0 cN and v₃₀ melt extensibility of 230 to 290 mm/s, like an F₃₀ melt strength of 32.0 to 42.0 cN and v₃₀ melt extensibility of 230 to 290 mm/s or an F₃₀ melt strength of 34.0 to 42.0 cN and v₃₀ melt extensibility of 250 to 290 mm/s or an F₃₀ melt strength of 34.0 to 42.0 cN and v₃₀ melt extensibility of 253 to 290 mm/s.

Further it is preferred that the polypropylene composition (PC), has a melt flow rate MFR₂ (230 °C) measured according to ISO 1133 of not more than 15.0 g/10min, more preferably in a range of 0.5 to 15.0 g/10 min, still more preferably in a range of 0.5 to 15.0 g/10 min, yet more preferably in a range of 1.0 to 15.0 g/10 min, like in the range of 1.5 to 15.0 g/10min or like in the range of 1.0 to 15.0 g/10min.

In a particularly preferred embodiment the polypropylene composition (PC), has a melt flow rate MFR₂ (230 °C) measured according to ISO 1133 of not more than 7.0 g/10min, preferably in a range of 0.5 to 7.0 g/10 min, more preferably in a range of 0.5 to 6.5 g/10 min, still more preferably in a range of 0.5 to 6.0 g/10 min, yet more preferably in a range of 1.0 to 6.0 g/10 min, like in the range of 1.5 to 5.0 g/10min or like in the range of 1.0 to 5.0 g/10min.

Hence in one specific embodiment, the polypropylene composition (PC), has
(a) a melt flow rate MFR₂ (230 °C) of not more than 15.0 g/10min, preferably in a range of 0.5 to 15.0 g/10 min, more preferably in a range of 0.5 to 15.0 g/10 min, yet more preferably in a range of 1.0 to 15.0 g/10 min, like in the range of 1.5 to 15.0 g/10min or like in the range of 1.0 to 15.0 g/10min;
(b) an F₃₀ melt strength of more than 20.0 cN, like of more than 20.0 to 50.0 cN, more preferably of more than 21.0 cN, still more preferably of 21.0 to 50.0 cN, yet more preferably of 25.0 to 50.0 cN, still yet more preferably of 25.0 to 45.0 cN, most preferably of 30.0 to 45.0 cN, like of 32.0 to 42.0 cN or 34.0 to 42.0 cN; and
(c) a v₃₀ melt extensibility of more than 200 mm/s, preferably more than 210 to 300 mm/s, like of more than 220 to 300 mm/s, more preferably of more than 225 mm/s, still more preferably of 225 to 300 mm/s, yet more preferably of 230 to 290 mm/s like 250 to 290 mm/s or 253 to 290 mm/s.

In a preferred variant of this embodiment the polypropylene composition (PC), has a melt flow rate MFR₂ (230 °C) measured according to ISO 1133 of not more than 7.0 g/lOmin, preferably in a range of 0.5 to 7.0 g/10 min, more preferably in a range of 0.5 to 6.5 g/10 min, still more preferably in a range of 0.5 to 6.0 g/10 min, yet more preferably in a range of 1.0 to 6.0 g/10 min, like in the range of 1.5 to 5.0 g/10min or like in the range of 1.0 to 5.0 g/10min.

Accordingly in a specific embodiment the polypropylene composition (PC), has a melt flow rate MFR₂ (230 °C) of not more than 15.0 g/10min, an F₃₀ melt strength of more than 20.0 cN and a v30 melt extensibility of more than 210 to 300 mm/s, like a melt flow rate MFR₂ (230 °C) in a range of 0.5 to 15.0 g/10 min, an F₃₀ melt strength of more than 20.0 to 50.0 cN and v₃₀ melt extensibility of more than 220 to 300 mm/s, more preferably a melt flow rate MFR₂ (230 °C) in a range of 0.5 to 15.0 g/10 min, an F₃₀ melt strength of more than 21.0 cN and v₃₀ melt extensibility of more than 225 mm/s, still more preferably a melt flow rate MFR₂ (230 °C) in a range of 1.0 to 15.0 g/10 min, an F₃₀ melt strength of 21.0 to 50.0 cN and v₃₀ melt extensibility of 225 to 300 mm/s, yet more preferably a melt flow rate MFR₂ (230 °C) in a range of 1.0 to 15.0 g/10min, an F₃₀ melt strength of 25.0 to 50.0 cN and v₃₀ melt extensibility of 230 to 290 mm/s, still yet more preferably a melt flow rate MFR₂ (230 °C) in a range of 1.0 to 15.0 g/10min, an F₃₀ melt strength of 25.0 to 45.0 cN and a v₃₀ melt extensibility of 230 to 290 mm/s, most preferably a melt flow rate MFR₂ (230 °C) in a range of 1.0 to 15.0 g/10min, an F₃₀ melt strength of 30.0 to 45.0 cN and v₃₀ melt extensibility of 230 to 290 mm/s, like a melt flow rate MFR₂ (230 °C) in a range of 1.0 to 15.0 g/10min, an F₃₀ melt strength of 32.0 to 42.0 cN and v30 melt extensibility of 230 to 290 mm/s or a melt flow rate MFR₂ (230 °C) in a range of 1.0 to 15.0 g/10min, an F₃₀ melt strength of 34.0 to 42.0 cN and v₃₀ melt extensibility of 250 to 290 mm/s or a melt flow rate MFR₂ (230 °C) in a range of 1.0 to 15.0 g/10min, an F₃₀ melt strength of 34.0 to 42.0 cN and v₃₀ melt extensibility of 253 to 290 mm/s.

In a preferred variant of this embodiment the polypropylene composition (PC), has a melt flow rate MFR₂ (230 °C) measured according to ISO 1133 of not more than 7.0 g/10min, preferably in a range of 0.5 to 7.0 g/10 min, more preferably in a range of 0.5 to 6.5 g/10 min, still more preferably in a range of 0.5 to 6.0 g/10 min, yet more preferably in a range of 1.0 to 6.0 g/10 min, like in the range of 1.5 to 5.0 g/10min or like in the range of 1.0 to 5.0 g/10min.

The polypropylene composition (PC) further preferably has a low gel content, usually below 1.00 wt.%. Preferably the gel content is less than 0.80 wt.%, more preferably less than 0.50 wt.%.

Thus, keeping the information provided above in mind the present invention for instance covers a polypropylene composition comprising
(a) 80.0 to 99.90 parts by weight preferably 90 to 99.90 parts by weight, more preferably 92 to 99.80 parts by weight, even more preferably 93.0 to 99.70 parts by weight of the high melt strength polypropylene (HMS-PP); and
(b) 0.10 to 15.0 parts by weight, preferably 0.20 to 10.0 parts by weight, more preferably 0.30 to 7.0 parts by weight and most preferably 0.30 to 5.0 parts by weight of the nucleating agent (NA),
(c) optionally 1 to 20 parts by weight, preferably 1 to 10 parts by weight, more preferably 1 to 5 parts by weight, of of the further high melt strength polypropylene (HMS-PP')
wherein the polypropylene composition has
- a melt flow rate MFR₂ (230 °C) measured according to ISO 1133 of not more than 7.0 g/10min, more preferably in a range of 0.5 to 15.0 g/10 min, yet more preferably in a range of 1.0 to 15.0 g/10 min, like in the range of 1.5 to 15.0 g/10min or like in the range of 1.0 to 15.0 g/10min;
- a gel content below 1.00 wt.%, preferably less than 0.80 wt.%, more preferably less than 0.50 wt.%;
- an F₃₀ melt strength of more than 20.0 cN, like of more than 20.0 to 50.0 cN, more preferably of more than 21.0 cN, still more preferably of 21.0 to 50.0 cN, yet more preferably of 25.0 to 50.0 cN, still yet more preferably of 25.0 to 45.0 cN, most preferably of 30.0 to 45.0 cN, like of 32.0 to 42.0 cN or 34.0 cN to 42.0 cN; and
- a v₃₀ melt extensibility of more than 210 to 300 mm/s, like of more than 220 to 300 mm/s, more preferably of more than 225 mm/s, still more preferably of 225 to 300 mm/s, yet more preferably of 230 to 290 mm/s, like 250 to 290 mm/s or 253 to 290 mm/s.

In a preferred variant of this embodiment the polypropylene composition (PC), has a melt flow rate MFR₂ (230 °C) measured according to ISO 1133 of not more than 7.0 g/10min, preferably in a range of 0.5 to 7.0 g/10 min, more preferably in a range of 0.5 to 6.5 g/10 min, still more preferably in a range of 0.5 to 6.0 g/10 min, yet more preferably in a range of 1.0 to 6.0 g/10 min, like in the range of 1.5 to 5.0 g/10min or like in the range of 1.0 to 5.0 g/10min.

### The foam

The present invention also features a foam comprising the instant polypropylene composition described herein. Preferably the foam comprises at least 70 wt.-%, more preferably at least 80 wt.-%, more preferably at least 90 wt.-%, yet more preferably at least 95 wt.-%, of the polypropylene composition according to the instant invention. In a preferred embodiment the foam consists of the instant polypropylene composition (PC) (apart from the foaming agents if still present in the foam after the foaming process).

The density of the foam is preferably 100 to 300 kg/m³, preferably from 125 to 275 kg/m³, more preferably from 150 to 250 kg/m³ and most preferably from 175 to 225 kg/m³.

### The foamed sheet

The foam of the present invention is preferably in the form of a sheet having a thickness of 1.5 mm or less and/or a density of 100 to 300 kg/m³, more preferably from 125 to 275 kg/m³, more preferably from 150 to 250 kg/m³ and most preferably from 175 to 225 kg/m³. Thus, in one embodiment the present invention is directed to a foamed sheet having a thickness of 1.5 mm or less and/or a density of 100 to 300 kg/m³, more preferably from 125 to 275 kg/m³, more preferably from 150 to 250 kg/m³ and most preferably from 175 to 225 kg/m³.

Preferably the thickness is 0.2 to 1.5 mm, more preferably 0.5 to 1.2 mm and particularly preferably 0.7 to 1.0 mm such as 0.7 to 0.9 mm.

The foam preferably has a cell size diameter, determined by light optical microscope, of 100 to 500 µm, more preferably 125 to 400 µm and most preferably 170 to 320 µm.

The foam is further characterized by its surface roughness. Usually the surface roughness is below 3.5 µm, preferably below 2.5 µm and most preferably below 1.5 µm.

### The multi-layered sheet

The present invention is further directed to a multi-layered sheet comprising the foamed sheet of the invention and a cover layer, the cover layer (CL) having a density of at least 0.85 g/cm³.

Preferably the cover layer (CL) comprises a polypropylene (CL-PP), preferably in an amount of at least 85 wt.%, more preferably at least 90 wt.% and most preferably at least 95 wt.%.

The polypropylene (CL-PP) is preferably selected from the group conssisting of a cast film of polypropylene, inflation film of polypropylene and a biaxial oriented polypropylen (BOPP) film. More preferably the polypropylene (CL-PP) is a biaxial oriented polypropylene (BOPP) film.

The thickness of the cover layer (CL) preferably does not exceed 100 µm, more preferably is 5 to 40 µm and most preferably 10 to 30 µm.

The cover layer may be directly adjacent to the foamed layer made from the foamed sheet of the present invention.

Alternatively and preferably an adhesive layer (AL) is present between the foamed layer made from the foamed sheet of the present invention and the cover layer.

The adhesive layer preferably comprises a polyethylene-polypropylene blend (PE-PP) having a PE:PP weight ratio of 5:95 to 95:5, preferably 5:95 to 50:50, more preferably 5:95 to 30:70 and most preferably 10:90 to 20:80.

The thickness of the adhesive layer (AL) is usually larger than the cover layer (CL).

The thickness of the adhesive layer (AL) preferably does not exceed 120 µm, more preferably is 20 to 80 µm, even more preferably is 30 to 70 µm and most preferably 40 to 60 µm.

Thus, in one variant the multi-layered sheet comprises
- the foamed sheet of the present invention; and
- a cover layer (CL), the cover layer having a density of at least 0.85 g/cm³ and comprising a polypropylene (CL-PP) which is preferably a biaxial oriented polypropylene (BOPP), in an amount of at least 85 wt.%, preferably at least 90 wt.% and most preferably at least 95 wt.% and/or having a thickness preferably not exceeding 100 µm, more preferably from 5 to 40 µm and most preferably from 10 to 30 µm.
whereby the foamed sheet of the present invention is directly attached to the a cover layer (CL).

In this variant no further layer, especially no adhesive layer, is present between the foamed sheet of the present invention and the cover layer (CL).

In an alternative and preferred variant the multi-layered sheet comprises
- an adhesive layer comprising a polyethylene-polypropylene blend (PE-PP) having a PE:PP weight ratio of 5:95 to 95:5, preferably 5:95 to 50:50, more preferably 5:95 to 30:70 and most preferably 10:90 to 20:80 and having a thickness not exceeding 100 µm, more preferably is 20 to 80 µm, even more preferably is 30 to 70 µm and most preferably 40 to 60 µm;
- the foamed sheet of the present invention directly attached to the first side of the adhesive layer; and
- a cover layer (CL) directly attached to the second side of the adhesive layer, the cover layer having a density of at least 0.85 g/cm³ and comprising a polypropylene (CL-PP) which is preferably a biaxial oriented polypropylene (BOPP), in an amount of at least 85 wt.%, preferably at least 90 wt.% and most preferably at least 95 wt.% and/or having a thickness preferably not exceeding 100 µm, more preferably from 5 to 40 µm and most preferably from 10 to 30 µm.

### The article

The present invention is furthermore directed to an article comprising the foamed sheet or the multi-layered sheet according to the present invention, the article preferably comprising the multi-layered sheet according to the present invention.

The article may be a container, e.g. a bottle, a cup, a can, a canister, a bowl or a tray; a sleeve, e.g. for a container; a lid, e.g. for a container; a film; a blank; a pad; a carrier; a tube; a substrate; a pipe; a vessel; a panel, e.g. a construction panel; a liner, e.g. a truck liner; a tape; a roll or a profile.

The article is preferably a container.

The container preferably comprises the multi-layered sheet according to the present invention whereby the cover layer is located on the inside of the container. The inside being the side where the fluid is located.

The container may, for example, be a bottle, a cup, a can, a canister a bowl or a tray.

In a particular preferred embodiment the container is a cup, preferably the body of the cup comprises, more preferably consists of, the multi-layered sheet of the present invention. Preferably the body of the cup has the cover layer on the inside.

By using the multi-layered sheet of the present invention as cup body excellent thermal insulation properties, e.g. in case of cold and hot beverages are obtained. Moreover, the uptake of liquid into the cup is minimal as the cover layer is located on the inside of the cup thereby sealing the pores of the foamed sheet from the liquid inside the cup. Usually in cups the cover layer is located on the outside of the cups to ensure adequate printability. However, the foamed sheet according to the present invention itself has good printability thereby eliminating the need of specific layers on the outside therefor.

### The Process

As already outlined above, the high melt strength polypropylene (HMS-PP) is produced by using the polypropylene (PP), preferably the linear polypropylene (l-PP). The process comprises at least a step (a) in which a polypropylene (PP) is reacted with a thermally decomposing free radical-forming agent and optionally with bifunctionally unsaturated monomer(s) and/or with multifunctionally unsaturated low molecular weight polymer(s) obtaining thereby the high melt strength polypropylene (HMS-PP).

Preferably the instant process comprises subsequent to step (a) a further step (b), in which to the high melt strength polypropylene (HMS-PP), the nucleating agent (NA) is added. As already outlined above, the nucleating agent (NA) may be added separately or as mixture with the further high melt strength polypropylene (HMS-PP'). Further additives (A) may optionally be present usually as mixture with the further high melt strength polypropylene (HMS-PP'), if present.

Even more preferred the instant process comprises subsequent to step (a) a further step (b), in which to the high melt strength polypropylene (HMS-PP), the nucleating agent (NA) and, optionally further additives (A), i.e. different from the nucleating agent (NA) are added. This may be accomplished using the additive mixture (AM) outlined above.

Subsequently the so produced polypropylene composition is subjected to a foaming process obtaining thereby a foam comprising the instant polypropylene composition.

Concerning the definitions and preferred embodiments of the foam, the polypropylene composition, the high melt strength polypropylene (HMS-PP), the further high melt strength polypropylene (HMS-PP'), the polypropylene (PP), the polypropylene (PP'), the nucleating agent (NA), the additives (A) and the additive mixture (AM) reference is made to the information provided above.

As mentioned above, in step (a) of the process for the manufacture of polypropylene composition the high melt strength polypropylene (HMS-PP), is obtained by treating the polypropylene (PP), preferably the linear polypropylene (l-PP), with thermally decomposing radical-forming agents. However in such a case a high risk exists that the polypropylene (PP), preferably the linear polypropylene (PP), is degraded, which is detrimental. Thus it is preferred that the chemical modification is accomplished by the additional use of bifunctionally unsaturated monomer(s) and/or multifunctionally unsaturated low molecular weight polymer(s) as chemically bound bridging unit(s). A suitable method to obtain the high melt strength polypropylene (HMS-PP), is for instance disclosed in EP 0 787 750, EP 0 879 830 A1 and EP 0 890 612 A2. All documents are herewith included by reference. Thereby, the amount of thermally decomposing radical-forming agents, preferably of peroxide, is preferably in the range of 0.05 to 3.00 wt.-% based on the amount of the polypropylene (PP). Typically the thermally decomposing radical-forming agents are added together with the bifunctionally unsaturated monomer(s) and/or with multifunctionally unsaturated low molecular weight polymer(s) to the polypropylene (PP), preferably to the linear polypropylene (l-PP). However it is also possible, but less preferred, that first the bifunctionally unsaturated monomer(s) and/or multifunctionally unsaturated low molecular weight polymer(s) is/are added to the polypropylene (PP), preferably to the linear polypropylene (l-PP), and subsequent the thermally decomposing radical-forming agents, or the other way round, first the thermally decomposing radical-forming agents are added to the polypropylene (PP), preferably to the linear polypropylene (l-PP), and subsequent the bifunctionally unsaturated monomer(s) and/or multifunctionally unsaturated low molecular weight polymer(s).

Concerning the bifunctionally unsaturated monomer(s) and/or multifunctionally unsaturated low molecular weight polymer(s) used for the manufacture of the high melt strength polypropylene (HMS-PP), reference is made to the section "the melt strength polypropylene (HMS-PP)".

As stated above it is preferred that the bifunctionally unsaturated monomer(s) and/or multifunctionally unsaturated low molecular weight polymer(s) are used in the presence of a thermally decomposing free radical-forming agent.

Peroxides are preferred thermally decomposing free radical-forming agents. More preferably the thermally decomposing free radical-forming agents are selected from the group consisting of acyl peroxide, alkyl peroxide, hydroperoxide, perester and peroxycarbonate.

The following listed peroxides are in particular preferred:
Acyl peroxides: benzoyl peroxide, 4-chlorobenzoyl peroxide, 3-methoxybenzoyl peroxide and/or methyl benzoyl peroxide.

Alkyl peroxides: allyl t-butyl peroxide, 2,2-bis(t-butylperoxybutane), 1,1-bis(t-butylperoxy)-3,3,5-trimethylcyclohexane, n-butyl-4,4-bis(t-butylperoxy) valerate, diisopropylaminomethyl-t-amyl peroxide, dimethylaminomethyl-t-amyl peroxide, diethylaminomethyl-t-butyl peroxide, dimethylaminomethyl-t-butyl peroxide, 1,1-di-(t-amylperoxy)cyclohexane, t-amyl peroxide, t-butylcumyl peroxide, t-butyl peroxide and/or 1-hydroxybutyl n-butyl peroxide.

Peresters and peroxy carbonates: butyl peracetate, cumyl peracetate, cumyl perpropionate, cyclohexyl peracetate, di-t-butyl peradipate, di-t-butyl perazelate, di-t-butyl perglutarate, dit-butyl perthalate, di-t-butyl persebacate, 4-nitrocumyl perpropionate, 1-phenylethyl perbenzoate, phenylethyl nitro-perbenzoate, t-butylbicyclo-(2,2,1)heptane percarboxylate, t-butyl-4-carbomethoxy perbutyrate, t-butylcyclobutane percarboxylate, t-butylcyclohexyl peroxycarboxylate, t-butylcyclopentyl percarboxylate, t-butylcyclopropane percarboxylate, t-butyldimethyl percinnamate, t-butyl-2-(2,2-diphenylvinyl) perbenzoate, t-butyl-4-methoxy perbenzoate, t-butylperbenzoate, t-butylcarboxycyclohexane, t-butyl pernaphthoate, t-butyl peroxyisopropylcarbonate, t-butyl pertoluate, t-butyl-1-phenylcyclopropyl percarboxylate, t-butyl-2-propylperpentene-2-oate, t-butyl-1-methylcyclopropyl percarboxylate, t-butyl-4-nitrophenyl peracetate, t-butylnitrophenyl peroxycarbamate, t-butyl-N-succiimido percarboxylate, t-butyl percrotonate, t-butyl permaleic acid, t-butyl permethacrylate, t-butyl peroctoate, t-butyl peroxyisopropylcarbonate, t-butyl perisobutyrate, t-butyl peracrylate and/or t-butyl perpropionate.

Also contemplated are mixtures of these above listed free radical-forming agents.

In one variant step (b) is initiated when at least 70 %, preferably at least 80 %, yet more preferably at least 90 %, like at least 95 or 99 %, of the reaction between the polypropylene (PP) and the thermally decomposing free radical-forming agent and optionally the bifunctionally unsaturated monomer has taken place to obtain the high melt strength polypropylene (HMS-PP).

Unless otherwise mentioned to the contrary in the following preferred embodiments of this variant are described.

In a preferred embodiment, an extruder, such as a twin screw extruder, is used for step (a) and for the optional step (b).

The use of an extruder is particularly advantageous in that it can simultaneously be used for the preparation of the high melt strength polypropylene (HMS-PP), and subsequent for adding the nucleating agent to said high melt strength polypropylene (HMS-PP). As outlined above, the nucleating agent (NA) may be added separately or together with further additives (A) different from the nucleating agent.

In a preferred embodiment, the polypropylene (PP) is added to an extruder together with - as described in detail above - the thermally decomposing free radical-forming agent, preferably a peroxide, and optionally with the bifunctionally unsaturated monomer(s) and/or with the multifunctionally unsaturated low molecular weight polymer(s), preferably with the bifunctionally unsaturated monomer(s) selected from divinyl compounds, allyl compounds or dienes, to provide the high melt strength polypropylene (HMS-PP), in step (a). It is also possible to use a combination of an extruder downstream of a pre-mixing device, wherein the bifunctionally unsaturated monomer(s) and/or the multifunctionally unsaturated low molecular weight polymer(s) and the thermally decomposing free radical-forming agent are added to the polypropylene in the pre-mixing device.

Subsequently, in a step (b) the nucleating agent (NA), the further high melt strength polypropylene (HMS-PP'), if present, and the additives (A), i.e. different from the nucleating agent (NA), if present are preferably added at the downstream end of the extruder screw in order not to interfere with the modification reaction for providing the high melt strength polypropylene (HMS-PP), as described above.

In this respect, the term "downstream end of the extruder screw" is understood as within the last 75 % of the length of the extruder screw, preferably within the last 70 % of the length of the extruder screw, more preferably at least 65 % of the length of the extruder screw.

Accordingly, the extruder (E) used for the instant process preferably comprises in operation direction a feed-throat (FT), a first mixing zone (MZ1), a second mixing zone (MZ2) and a die (D), wherein between the first mixing zone (MZ1) and the second mixing zone (MZ2) a side feed-throat (SFT) is located. Preferably the extruder is a screw extruder, like a twin screw extruder. Accordingly the polypropylene (PP), the thermally decomposing free radical-forming agent, preferably a peroxide, and optionally the bifunctionally unsaturated monomer and/or the multifunctionally unsaturated low molecular weight polymer monomer, preferably selected from divinyl compounds, allyl compounds or dienes, but not the nucleating agent (NA), not the further high melt strength polypropylene (HMS-PP'), if present, and not the additives (A) different from the nucleating agent (NA), if present, are fed via the feed-throat (FT), thereby preferably using a feeder, into the extruder and is/are subsequently passed downstream through the first mixing zone (MZ1). Preferably the shear stress in said first mixing zone (MZ1) is of such extent that the polypropylene (PP) is molten and the chemical reaction with the radical-forming agent and with the optional bifunctionally unsaturated monomer and/or multifunctionally unsaturated low molecular weight polymer is initiated. After the first mixing zone (MZ1), i.e. between the first mixing zone (MZ1) and the second mixing zone (MZ2), the nucleating agent (NA), the further high melt strength polypropylene (HMS-PP'), if present, and the additives (A) different from the nucleating agent (NA), if present, is/are added, i.e. fed into the extruder. Preferably the nucleating agent (NA), the further high melt strength polypropylene (HMS-PP'), if present, and the additives (A) different from the nucleating agent (NA), if present is/are added via the side feed-throat (SFT), thereby preferably using a side feeder. Subsequently all components of the polypropylene composition, including the nucleating agent (NA), the further high melt strength polypropylene (HMS-PP'), if present, and the additives (A) different from the nucleating agent (NA), if present are passed downstream through the second mixing zone (MZ2). Finally the polypropylene composition is discharged via the die (D).

Preferably, the first mixing zone (MZ1) is longer than the second mixing zone (MZ2). Preferably the length ratio between the first mixing zone (MZ1) to the second mixing zone (MZ2) [mm (MZ1) / mm (MZ2)] is at least 2/1, more preferably 3/1, yet more preferably in the range of 2/1 to 15/1, still more preferably 3/1 to 10/1.

In another preferred variant, the high melt strength polypropylene (HMS-PP) obtained in step (a) is separated prior to further processing. Such a separation may include storage and transport of the high melt strength polypropylene (HMS-PP) to another facility.

Unless otherwise mentioned to the contrary in the following preferred embodiments of this variant are described.

In this variant in process step (b) the high melt strength polypropylene (HMS-PP) is combined with the nucleating agent (NA) whereby the nucleating agent (NA) may be added separately or as mixture with the further high melt strength polypropylene (HMS-PP'). Further additives (A) different from the nucleating agent may optionally be present usually as mixture with the further high melt strength polypropylene (HMS-PP'), if present.

In a preferred embodiment, an extruder, such as a twin screw extruder, is used for step (a).

In a preferred embodiment, the polypropylene (PP) is added to an extruder together with - as described in detail above - the thermally decomposing free radical-forming agent, preferably a peroxide, and optionally with the bifunctionally unsaturated monomer(s) and/or with the multifunctionally unsaturated low molecular weight polymer(s), preferably with the bifunctionally unsaturated monomer(s) selected from divinyl compounds, allyl compounds or dienes, to provide the high melt strength polypropylene (HMS-PP), in step (a). It is also possible to use a combination of an extruder downstream a pre-mixing device, wherein the bifunctionally unsaturated monomer(s) and/or the multifunctionally unsaturated low molecular weight polymer(s) and the thermally decomposing free radical-forming agent are add to the polypropylene in the pre-mixing device.

Accordingly, the extruder (E) used for the preparation of the high melt strength polypropylene (HMS-PP) preferably comprises in operation direction a feed-throat (FT), a first mixing zone (MZ1), optionally, a second mixing zone (MZ2) and a die (D). Preferably the extruder is a screw extruder, like a twin screw extruder. Accordingly the polypropylene (PP), the thermally decomposing free radical-forming agent, preferably a peroxide, and optionally the bifunctionally unsaturated monomer and/or the multifunctionally unsaturated low molecular weight polymer monomer, preferably selected from divinyl compounds, allyl compounds or dienes, but not the nucleating agent (NA), not the further high melt strength polypropylene (HMS-PP'), if present, and not the additives (A) different from the nucleating agent (NA), if present, are fed via the feed-throat (FT), thereby preferably using a feeder, into the extruder and is/are subsequently passed downstream through the first mixing zone (MZ1). Preferably the shear stress in said first mixing zone (MZ1) is of such extent that the polypropylene (PP) is molten and the chemical reaction with the radical-forming agent and with the optional bifunctionally unsaturated monomer and/or multifunctionally unsaturated low molecular weight polymer is initiated.

After the first mixing zone (MZ1), the obtained product is passed downstream through the second mixing zone (MZ2), if present. Finally the high melt strength polypropylene (HMS-PP) is discharged via the die (D).

In case the second mixing zone is present, the first mixing zone (MZ1) is longer than the second mixing zone (MZ2). Preferably the length ratio between the first mixing zone (MZ1) to the second mixing zone (MZ2) [mm (MZ1) / mm (MZ2)] is at least 2/1, more preferably 3/1, yet more preferably in the range of 2/1 to 15/1, still more preferably 3/1 to 10/1.

The, thus obtained high melt strength polypropylene (HMS-PP) is then combined in step (b) with the nucleating agent (NA), the further high melt strength polypropylene (HMS-PP'), if present, and the additives (A) different from the nucleating agent (NA), if present

In a preferred embodiment, an extruder, such as a twin screw extruder, is used for step (b).

In a preferred embodiment, the high melt strength polypropylene (HMS-PP) is added to an extruder together with - as described in detail above - the nucleating agent (NA), the further high melt strength polypropylene (HMS-PP'), if present, and the additives (A) different from the nucleating agent (NA), if present, are fed via the feed-throat (FT). It is also possible to use a combination of an extruder downstream a pre-mixing device, wherein the nucleating agent (NA), the further high melt strength polypropylene (HMS-PP'), if present, and the additives (A) different from the nucleating agent (NA), if present are added to the high melt strength polypropylene (HMS-PP) in the pre-mixing device.

Accordingly, the extruder (E) used for the preparation of the propylene composition (PC) preferably comprises in operation direction a feed-throat (FT), a first mixing zone (MZ1), optionally, a second mixing zone (MZ2) and a die (D). Preferably the extruder is a screw extruder, like a twin screw extruder. Accordingly the high melt strength polypropylene (HMS-PP), the nucleating agent (NA), the further high melt strength polypropylene (HMS-PP'), if present, and the additives (A) different from the nucleating agent (NA), if present, are fed via the feed-throat (FT), thereby preferably using a feeder, into the extruder and is/are subsequently passed downstream through the first mixing zone (MZ1). Preferably the shear stress in said first mixing zone (MZ1) is of such extent that the high melt strength polypropylene (HMS-PP) is molten and mixing with the nucleating agent (NA), the further high melt strength polypropylene (HMS-PP'), if present, and the additives (A) different from the nucleating agent (NA), if present, is initiated.

After the first mixing zone (MZ1), the obtained product is passed downstream through the second mixing zone (MZ2), if present. Finally the polypropylene composition (PC) is discharged via the die (D).

In case the second mixing zone is present, the first mixing zone (MZ1) is longer than the second mixing zone (MZ2). Preferably the length ratio between the first mixing zone (MZ1) to the second mixing zone (MZ2) [mm (MZ1) / mm (MZ2)] is at least 2/1, more preferably 3/1, yet more preferably in the range of 2/1 to 15/1, still more preferably 3/1 to 10/1.

In the following preferred features of all embodiments and variants of the process are described unless explicitly mentioned to the contrary.

The foaming process is in the skilled knowledge. In such a process, a melt of the instant polypropylene composition comprising a gaseous or liquid foaming agent such as butane, mixtures of butane and propane, HFC or CO₂ is suddenly expanded through pressure drop. Preferably a liquid blowing agent is used, e.g. butane or mixtures of butane and propane. Continuous foaming processes as well as discontinuous process may be applied. In a continuous foaming process, the polypropylene composition is melted and laden with gas in an extruder under pressures typically above 20 bar before being extruded through a die where the pressure drop causes the formation of a foam. The mechanism of foaming polypropylene in foam extrusion is explained, for example, in H. E. Naguib, C. B. Park, N. Reichelt, Fundamental foaming mechanisms governing the volume expansion of extruded polypropylene foams, Journal of Applied Polymer Science, 91, 2661-2668 (2004). Processes for foaming are outlined in S. T. Lee, Foam Extrusion, Technomic Publishing (2000). In a discontinuous foaming process, the polypropylene composition (micro-)pellets are laden with foaming agent under pressure and heated below melting temperature before the pressure in the autoclave is suddenly relaxed. The dissolved foaming agent forms bubbles and creates a foam structure. The preparation of discontinuously foamed beads is described for example in DE 3 539 352.

The amount of foaming agent is usually below 10 wt.% based on the total weight of the polymer composition and the foaming agent, preferably below 5 wt.% based on the total weight of the polymer composition and the foaming agent.

Preferred foaming agents are butane and mixtures of butane and propane.

As outlined above, preferably a foamed sheet is formed. Methods for forming foamed sheets are generally known in the art and *inter alia* described in TW M 463649 which is hereby incorporated by reference in its entirety. Preferably the method and apparatus described in TW M 463649 is used to prepare the foamed sheet according to the present invention.

The article which may be a container, e.g. a bottle, a cup, a can, a canister, a bowl or a trays; a sleeve, e.g. for a container; a lid, e.g. for a container; a film; a blank; a pad; a carrier; a tube; a substrate; a pipe; a vessel; a panel, e.g. a construction panel; a liner, e.g. a truck liner; a tap; a roll or a profile containers, such as according to the present invention are prepared using procedures usual in the art.

### The use

The present invention is further directed to the use of the polypropylene composition (PC) according to the invention, the foamed sheet according to the invention or the multi-layered sheet according to the invention for the production of an article, such as a container.

The container may, for example, be a bottle, a cup, a can a canister, a bowl or a tray.

### EXAMPLES

### A. Measuring methods

The following definitions of terms and determination methods apply for the above general description of the invention as well as to the below examples unless otherwise defined.

### Comonomer content in polypropylene

The comonomer content is determined by quantitative Fourier transform infrared spectroscopy (FTIR) after basic assignment calibrated via quantitative ¹³C nuclear magnetic resonance (NMR) spectroscopy in a manner well known in the art. Thin films are pressed to a thickness of 250 µm and spectra recorded in transmission mode.

Specifically, the ethylene content of a polypropylene-co-ethylene copolymer is determined using the baseline corrected peak area of the quantitative bands found at 720-722 and 730-733 cm⁻¹. Propylene-1-butene-copolymers were evaluated at 767 cm⁻¹. Quantitative results are obtained based upon reference to the film thickness.

**Melting temperature (Tₘ) and heat of fusion (H_{f}), crystallization temperature (T_{c}) and heat of crystallization (H_{c}):** The melting temperature Tₘ and crystallisation temperature T_{c} were measured with a TA Instruments Q2000 differential scanning calorimetry device (DSC) according to ISO 11357/3 on 5 to 10 mg samples. Crystallisation and melting temperatures were obtained in a heat/cool/heat cycle with a scan rate of 10°C/min between 30°C and 225°C. Melting and crystallisation temperatures were taken as the peaks of the endotherms and exotherms in the cooling cycle and the second heating cycle respectively.
**MFR₂ (230 °C)** is measured according to ISO 1133 (230 °C, 2.16 kg load).

### F₃₀ melt strength and v₃₀ melt extensibility

The test described herein follows ISO 16790:2005.

The strain hardening behaviour is determined by the method as described in the article "Rheotens-Mastercurves and Drawability of Polymer Melts", M. H. Wagner, Polymer Engineering and Sience, Vol. 36, pages 925 to 935. The content of the document is included by reference. The strain hardening behaviour of polymers is analysed by Rheotens apparatus (product of Göttfert, Siemensstr.2, 74711 Buchen, Germany) in which a melt strand is elongated by drawing down with a defined acceleration.

The Rheotens experiment simulates industrial spinning and extrusion processes. In principle a melt is pressed or extruded through a round die and the resulting strand is hauled off. The stress on the extrudate is recorded, as a function of melt properties and measuring parameters (especially the ratio between output and haul-off speed, practically a measure for the extension rate). For the results presented below, the materials were extruded with a lab extruder HAAKE Polylab system and a gear pump with cylindrical die (L/D = 6.0/2.0 mm). The gear pump was pre-adjusted to a strand extrusion rate of 5 mm/s, and the melt temperature was set to 200°C. The spinline length between die and Rheotens wheels was 80 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions. The acceleration of the melt strand drawn down is 120 mm/sec². The Rheotens was operated in combination with the PC program EXTENS. This is a real-time data-acquisition program, which displays and stores the measured data of tensile force and drawdown speed. The end points of the Rheotens curve (force versus pulley rotary speed) is taken as the F₃₀ melt strength and drawability values.

### Gel content

About 2 g of the polymer (mₚ) are weighted and put in a mesh of metal which is weighted (mₚ₊ₘ). The polymer in the mesh is extracted in a soxhlet apparatus with boiling xylene for 5 hours. The eluent is then replaced by fresh xylene and the boiling is continued for another hour. Subsequently, the mesh is dried and weighted again (m_{XHU+m}). The mass of the xylene hot unsolubles (m_{XHU}) obtained by the formula m_{XHU+m} - mₘ = m_{XHU} is put in relation to the weight of the polymer (mₚ) to obtain the fraction of xylene insolubles m_{XHU}/mₚ.

### Particle size/Particle size distribution of the polymer

A gradation test was performed on the polymer samples. The sieve analysis involved a nested column of sieves with wire mesh screen with the following sizes: >20 µm, >32 µm, >63 µm, >100 µm, >125 µm, >160 µm, > 200 µm, >250 µm, > 315 µm, > 400 µm, >500 µm, >710 µm, >1 mm, >1.4 mm, > 2 mm, >2.8 mm. The samples were poured into the top sieve which has the largest screen openings. Each lower sieve in the column has smaller openings than the one above (see sizes indicated above). At the base is the receiver. The column was placed in a mechanical shaker. The shaker shook the column. After the shaking was completed the material on each sieve was weighed. The weight of the sample of each sieve was then divided by the total weight to give a percentage retained on each sieve.

### Particle size of the nucleating agent

The median particle size d₅₀ is calculated from the particle size distribution [mass percent] as determined by gravitational liquid sedimentation according to ISO 13317-3 using a Sedigraph 5100 (Micromeritics Corporation).

### Density of the foam

This has been measured using an analytical and semi-micro precision balance of Switzerland PRECISA Gravimetrics AG, Switzerland, the specific gravity balance (XS225A); test method: application of Archimedes, automatically calculate the density of the sample.

### Cell size diameter of the foam

The cell size diameter of the foam was determined using a light optical microscope of Tawain CBS Stereoscopic microscope;

The testing method used is as follows:
1. Cut a strip of the foamed material along the cross direction (CD) and machine direction (MD).
2. Hold the foamed material with a flat clamp and use a razor blade to perform a fine shave.
3. Focus the microscope at 100× and adjust lighting onto the foamed material.
4. Perform length and width measurements of each unique cell in the CD and MD orientation and record values.
5. Count the number of measured unique cells and record the values.
6. Perform cell wall thickness measurements across 3-4 tangent lines to overall length of each unique cell in the CD and MD orientation and record the values.
7. Perform three overall strip thickness measurements starting from the bottom of the first measured cell group, to the middle of the cell group, to the top of the cell group.
8. Perform an overall length measurement starting from the lowest complete cell to the highest complete cell.
9. Move microscope visual field so the bottom of the most upper incomplete cell is touching the bottom of the screen.
10. Repeat steps 4-9 on each new unique cell until about 0.200" to 0.800" of the strip is measured. Ensure that the overall length and cell composition does not overlap. Each overall length measurement after the first measurement is taken from the top of the previous highest complete cell to the top of the current highest complete cell.

### Surface roughness of the foam

This has been measured using the portable surface roughness tester, model SJ-310 of Mitutoyo, Japan. The surface roughness tester (also known as a profilometer) is a contact surface roughness tester. The roughness determination is fully automated and runs via the included software.

### B. Examples

### Preparation of an insulation cup:

The following steps are applied.
1. Preparing of a blend of Daploy™ WB140HMS of Borealis AG (HMS-PP) with the nucleating agent talc in a weight ratio of 97/3. The high melt strength polypropylene WB140HMS has a melt flow rate MFR₂ (230 °C) of 2.1 g/10min, a melt strength F₃₀ of 36 cN and a melt extensibility v₃₀ of 255 mm/s. Talc is the commerical product HV4 of IMIFABI company having a particle size d₅₀ of 7 µm and a d₉₅ of 20 µm;
2. feeding the blend obtained in the 1^{st} step into a 1^{st} single screw extruder of Pitac Taiwan (screw diameter 90 mm; L/D ratio 26). The extruder is operated at a temperature of 200 °C (5 heating zones: 150 °C; 200 °C; 200 °C; 200 °C; 200 °C) so as to melt the polymer;
3. injecting of 5 wt% liquid butane (as blowing agent) in the last section of the 1^{st} single screw extruder obtaining thereby a molten blend;
4. passing the molten blend through a 2^{nd} single screw extruder of Pitac Taiwan (screw diameter 120 mm; L/D ratio 34) thereby cooling down the molten blend to 160 °C at the end of the 2^{nd} single screw extruder;
5. passing the molten blend of the 4^{th} step through an extruding die placed at the end of the 2^{nd} extruder; when exiting the extruder the molten blend is exposed to a pressure drop into atmospheric pressure (pressure difference is about 100 bar); by the sudden pressure drop the blowing aget in the molten blend expands and thereby accomplishes foaming resulting in a foamed structure; subsequently the foamed structure is cooled at cooling-drums with temperature below 100 °C thereby obtaining a foam sheet having a density of 200 kg/m³ and a thickness of 0.7 mm;
6. thereafter the foam sheet and a 20 µm thick BOPP film are passed through an in-line extruding laminating unit of YC Group Taiwan to laminate the foam sheet on one side of a substrate made from the commercial polypropylene PC932 of LCY of Tawain and on the other side of said substrate the BOPP film obtaining thereby a 3 layer sheet of 0.7 mm foam sheet, 50 µm substrate and 20 µm BOPP film;
7. winding the 3 layer sheet to a roll;
8. curing the 3 layer sheet for 3 days and subsequently processeing the 3 layer sheet with a flatting machine of Pitac Tawain to obtain flat sheets of 652 mm width and 762 mm length, simultaneiously the foam layer of the 3 layer sheet is subjected Corona treatment;
9. subsequently the flatt sheets are printed on the corona treated surface with a UV offset printing apparatus of Komori Japan and passed through a die-cut process of Baodear Tawain to obtain a blank material;
10. the blank material is used in a cup forming machine of ACE PACK Korea to obtain an insulated cup (during the process the blank material for the lateral surface of the cup is heated up to 280 °C; the side sealing temperature is 450 °C in order to melt a little the surface of the blank material for the lateral surface of the cup and make it ready for binding, whereas the blank material for the bottom (width 80 mm) of the cup is heated up 100 °C for the forming and punching steps obtaining thereby the bottom of the cup; subsequently said bottom of the cup is heated up to 300 °C and folded with lateral surface of the cup; the rimming process of the top portion of the cup is accomplished by heating the far side to the bottom of the lateral surface of the cup up to 400 °C and then passing it through rimming process.

## Claims

1. A polypropylene composition (PC) comprising
- a high melt strength polypropylene (HMS-PP); and
- a nucleating agent (NA) having a particle size d50 within the range of 1 µm to 30 µm.

2. The polypropylene composition (PC) according to claim 1, wherein the nucleating agent (NA) is present in an amount of 0.10 to 10.0 wt.% based on the polypropylene composition (PC).

3. The polypropylene composition (PC) according to any one of the preceding claims 1 or 2, wherein the nucleating agent (NA) is talc.

4. The polypropylene composition (PC) according to any one of the preceding claims, wherein the high melt strength polypropylene (HMS-PP) has an F₃₀ melt strength of more than 30.0 cN and/or a v₃₀ melt extensibility of more than 220 mm/s, wherein the F₃₀ melt strength and the v₃₀ melt extensibility are determined according to ISO 16790:2005.

5. The polypropylene composition (PC) according to any one of the preceding claims, wherein the high melt strength polypropylene (HMS-PP) makes up at least 70 wt.% of the polypropylene composition (PC).

6. A foam comprising the polypropylene composition (PC) according to any one of the preceding claims 1 to 5.

7. The foam according to claim 6 being in the form of a sheet having a thickness of 1.5 mm or less and/or a density of 150 to 250 kg/m³.

8. A multi-layered sheet comprising the foamed sheet according to claim 6 or 7 and a cover layer (CL), the cover layer (CL) having a density of at least 0.85 g/cm³.

9. The multi-layered sheet according to claim 8, wherein the cover layer (CL) comprises a polypropylene (CL-PP).

10. The multi-layered sheet according to claim 9, wherein the polypropylene (CL-PP) is a biaxial oriented polypropylene (BOPP).

11. An article comprising the polypropylene composition (PC) according to any one of the preceding claims 1 to 5, the foamed sheet according to any one of the preceding claims 6 or 7 or comprising the multi-layered sheet according to any one of the preceding claims 8 to 10.

12. The article of claim 11 being a container and comprising the multi-layered sheet according to any one of the preceding claims 8 to 10, whereby the cover layer is located on the inside of the container.

13. The article of claim 11 being a container or the container of claim 12 which is a bottle, a cup, a can, a canister, a bowl or a tray.

14. A process for producing the foamed sheet according to the preceding claim 6 or 7, the multi-layered sheet according to any one of the preceding claims 8 to 10 and/or the article according to any one of the preceding claims 11 to 13.

15. Use of the polypropylene composition (PC) according to any one of the preceding claims 1 to 5, the foamed sheet according to any one of the preceding claim 6 or 7 or the multi-layered sheet according to any one of the preceding claims 8 to 10 for the production of an article.
